# FASCICULE DE BREVET EUROPEEN

(11) **EP 2 772 739 B1**
(45) Date de publication et mention de la délivrance du brevet: **04.07.2018**
(21) Numéro de dépôt: 14156918.6
(22) Date de dépôt: 27.02.2014
(51) Int. Cl.: G01L 5/00, B66F 9/00

(54) **Nacelle élévatrice comprenant une cellule de mesure de poids**
Liftgondel, die einen Gewichtsmesssensor umfasst
Aerial lift including a weighing cell

(30) Priorité: 01.03.2013 FR 1351845
(43) Date de publication de la demande: 03.09.2014
(73) Titulaire: Haulotte Group, 42152 L'Horme (FR)
(72) Inventeur: Parot, Sébastien, 42800 Saint Martin La Plaine (FR); Bonnefoy, Nicolas, 42400 Saint Chamond (FR)
(74) Mandataire: Lavoix

(56) Documents cités:
- EP-A2- 0 344 496
- WO-A1-2007/043499
- US-A1- 2007 227 239

## Description

L'invention concerne une nacelle élévatrice équipée d'une cellule de mesure du poids d'une charge supportée par une plateforme de la nacelle.

Une nacelle élévatrice inclut un châssis équipé de moyens de déplacements sur la surface du sol, une plateforme de support de charges ou de personnes, un mât et des moyens d'élévation de la plateforme par rapport au châssis. Dans le domaine du levage de charges et de personnes, il est important de pouvoir mesurer les efforts verticaux appliqués sur la plateforme. En effet, cela permet de prévenir une surcharge et de garantir la sécurité des opérateurs. En pratique, si la charge mesurée dépasse la limite autorisée, le fonctionnement de la nacelle est bloqué. De plus, la réglementation impose que la charge levée doit être mesurée avec une marge d'erreur de l'ordre de 20%. Bien que cette marge d'erreur semble a priori, large, il est toutefois difficile d'atteindre cette précision pour des cellules de pesée intégrées à des engins de chantier. En effet, les cellules de pesée sont couramment montées à l'extérieur de la nacelle, ce qui implique de réaliser des traitements de surface au niveau des zones de contact et d'exposer la cellule de mesure d'effort à un environnement de chantier. Ainsi, de la poussière ou autres saletés sont susceptibles de la dégrader.

A ce titre, il est connu de US-A-4 530 245 une cellule permettant de mesurer la déformation au sein d'une structure. Cette cellule est destinée à être intégrée dans un logement au sein d'une structure quelconque. Elle est de forme globalement cylindrique et a un diamètre légèrement supérieur à celui du logement prévu dans la structure. Ainsi, il est nécessaire d'impacter la cellule de mesure d'effort afin de la faire progresser dans le logement. Cette méthode d'assemblage est assez contraignante puisque cela nécessite le plus souvent un apport d'énergie supplémentaire et la cellule de mesure d'effort est rendue indémontable. De plus, les coups assénés à la cellule de mesure d'effort lors de l'impact induisent des contraintes résiduelles au sein de la cellule de mesure d'effort, ce qui rend la mesure d'effort imprécise.

Par ailleurs, EP-A-0 344 496 divulgue une cellule de mesure d'effort, prévue pour être encastrée dans une paroi, notamment dans la paroi d'un essieu de véhicule. Cette cellule de mesure comporte un corps, à l'intérieur duquel est monté un capteur. Le corps comporte une surface extérieure tronconique et est reçue dans une pièce creuse délimitant un alésage complémentaire de la surface extérieure du corps. Le domaine technique de EP-A-0 344 496 est éloigné du domaine des nacelles élévatrices.

C'est à ces inconvénients qu'entend plus particulièrement remédier l'invention en proposant une nacelle élévatrice dans laquelle l'intégration d'une cellule de mesure du poids de la charge supportée par la plateforme est facilitée et n'engendre pas de contraintes résiduelles.

A cet effet, l'invention concerne une nacelle élévatrice comprenant un châssis équipé de moyens de déplacement sur la surface du sol, une plateforme, des moyens d'élévation de la plateforme par rapport au châssis et une cellule de mesure du poids d'une charge supportée par la plateforme, celle cellule ayant un corps supportant au moins un capteur et s'étendant selon un axe longitudinal. Conformément à l'invention, une surface géométrique d'enveloppe du corps, autour de l'axe longitudinal, est convergente vers cet axe, et la cellule de mesure du poids est encastrée, selon un axe d'encastrement, dans un logement défini par une surface de forme complémentaire à la surface géométrique d'enveloppe, prévu dans une structure de support de la plateforme.

Grâce à l'invention, il est possible de monter ou de démonter une cellule de mesure d'effort de manière simple sur une nacelle élévatrice, sans que la cellule de mesure d'effort ne subisse de contraintes lors de son montage.

Selon des aspects avantageux mais non obligatoire de l'invention, une telle nacelle élévatrice peut incorporer une ou plusieurs des caractéristiques suivantes, prises dans toute combinaison techniquement admissible :
- La surface géométrique d'enveloppe est une surface de forme tronconique.
- La surface géométrique d'enveloppe est une surface de section transversale, elliptique ou polygonale.
- Le corps de la cellule de mesure comprend une ou plusieurs nervures qui s'étendent parallèlement à l'axe longitudinal et qui sont régulièrement réparties autour de celui-ci et en ce que les surfaces extérieures des nervures définissent la surface géométrique d'enveloppe du corps.
- Le corps de la cellule est creux et comprend à l'intérieur, au moins deux supports qui sont diamétralement opposés et entre lesquels est fixé un capteur.
- Le capteur est une jauge de déformation.
- La cellule comprend en outre une couronne qui est disposée autour et à l'extrémité du corps de la cellule, du côté divergent de la surface géométrique d'enveloppe du corps.
- La couronne est fixée à la structure de support au moyen de vis, le jeu de serrage des vis, pris selon l'axe d'encastrement, étant supérieur à 2 mm.
- La cellule de mesure est fabriquée dans un matériau ayant des propriétés de dilatation thermique similaires de celles du matériau de la structure de support.

L'invention sera mieux comprise et d'autres avantages de celle-ci apparaitront plus clairement à la lumière de la description qui va suivre d'un mode de réalisation d'une nacelle élévatrice conforme à son principe, donnée uniquement à titre d'exemple et faite en référence aux dessins annexés dans lesquels :
- la figure 1 est une vue en perspective d'une nacelle conforme à l'invention,
- la figure 2 est une vue à plus grande échelle et en configuration éclatée, de l'encadré II de la figure 1,
- la figure 3 est une vue de détail selon la flèche III de la figure 1,
- la figure 4 est une coupe selon la ligne IV-IV de la figure 2,
- la figure 5 est une coupe à plus grande échelle selon la ligne V-V à la figure 3,
- la figure 6 est une coupe de détail selon la ligne VI-VI de la figure 5.

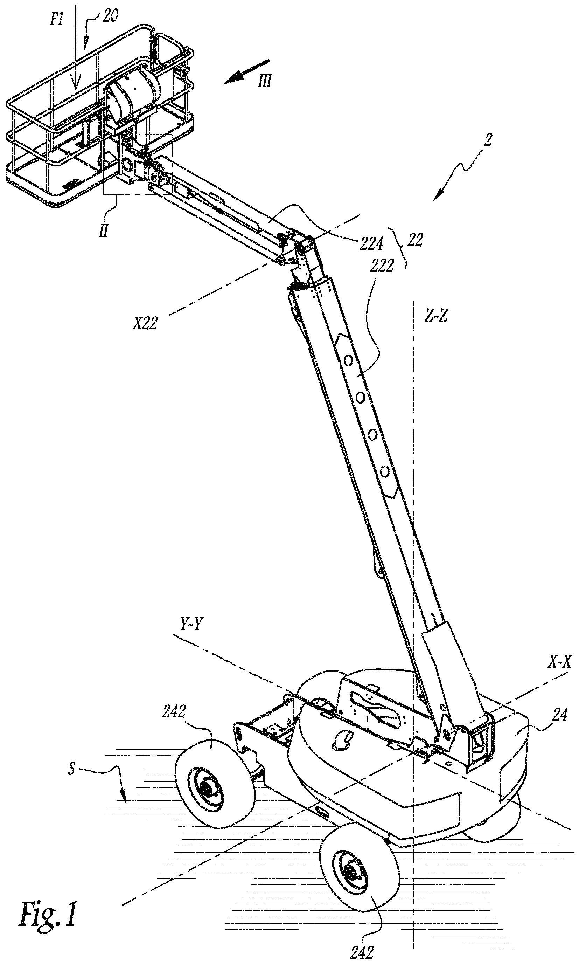

Sur la figure 1 est représentée une nacelle élévatrice. Cette nacelle élévatrice 2 comprend un châssis 24 équipé de moyens de déplacement 242 sur la surface S du sol. En l'occurrence, ces moyens de déplacement sont des roues 242 mais il peut également s'agir de chenilles. On définit un axe Y-Y comme l'axe définissant la direction de déplacement en ligne droite du châssis 24 par rapport au sol. La nacelle élévatrice 2 inclut une plateforme 20 de support de charge ou de personnes, apte à se déplacer verticalement, selon un axe vertical Z-Z, par rapport au châssis 24.

Pour assurer le mouvement de la plateforme 20, la nacelle élévatrice 2 comprend un mât 22 qui est rattaché au châssis 24 par une liaison pivot autour d'un axe X-X qui est perpendiculaire aux axes Z-Z et Y-Y. Le mât 22 comprend deux bras articulés autour d'un axe X22 sensiblement parallèle à l'axe X-X et qui sont mis en mouvement par des vérins. Cette technique de mise en mouvement de la plateforme est connue ; c'est pourquoi ces vérins n'apparaissent pas sur les figures. Un premier bras 222 du mât 22 est articulé sur le châssis 24 et un deuxième bras 224 du mât 22, en liaison pivot avec le premier bras 222 autour de l'axe X22, supporte la plateforme 20.

En configuration d'utilisation, on définit schématiquement un effort vertical F1 s'appliquant sur le plancher de la plateforme 20 comme l'effort que l'on doit précisément mesurer afin d'éviter une surcharge sur la plateforme 20. La nacelle 2 comprend donc une cellule de mesure d'effort qui est située au plus près de la plateforme 20, ceci afin de minimiser l'influence du poids de la structure mécanique de la nacelle 2 sur la mesure et de restituer fidèlement l'effort vertical F1 appliqué sur la plateforme 20. L'effort vertical F1 représente le poids d'une charge supportée par la plateforme 20.

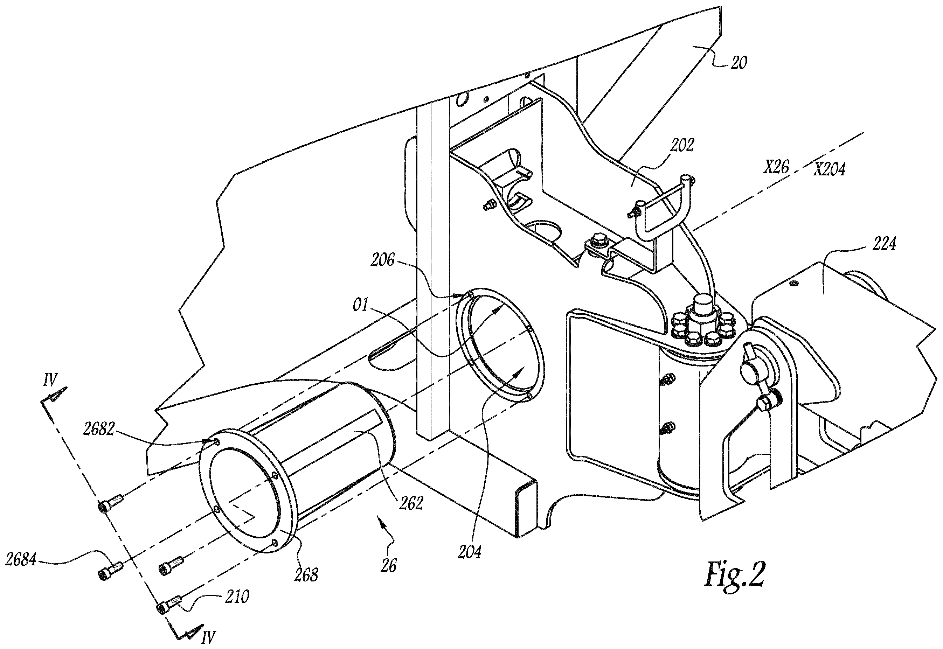

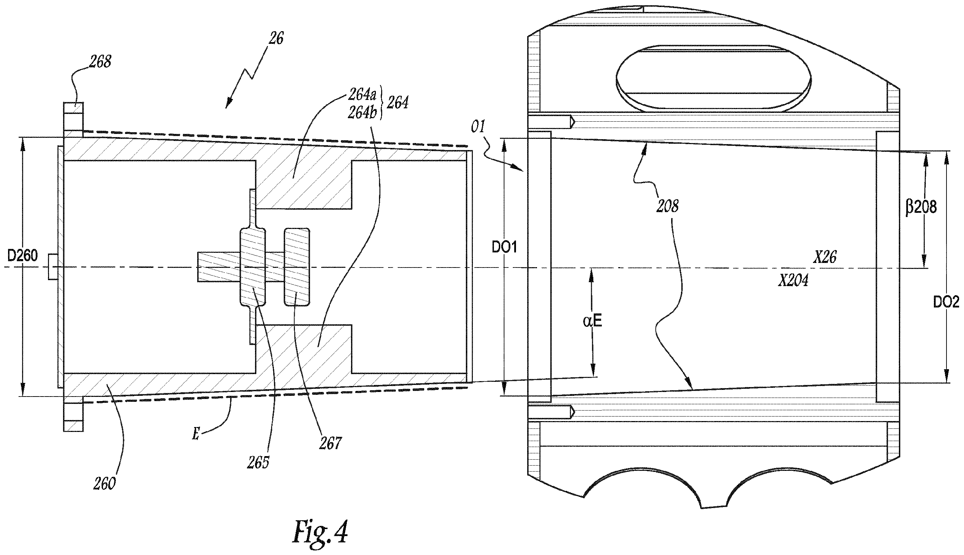

Comme visible aux figures 2 à 6, la nacelle élévatrice 2 comprend une cellule de mesure 26 qui, pour la clarté du dessin, est représentée à l'extérieur de la plate-forme 20. Cette cellule de mesure 26 permet de mesurer le poids appliqué sur la plateforme 20 de la nacelle élévatrice 2. Elle comporte un corps 260 creux qui s'étend selon un axe longitudinal X26. Pour une meilleure clarté de la description, on définit une surface géométrique d'enveloppe E du corps 260 de la cellule 26 autour de l'axe X26. Cette surface géométrique d'enveloppe E est représentée en pointillé à la figure 4. Elle est imaginaire et définie dans un but explicatif. Comme illustré à la figure 2, le corps 260 de la cellule 26 est globalement à section circulaire, centré sur l'axe X26 et comporte quatre nervures longitudinales 262 régulièrement réparties autour de l'axe X26 et chacune décalée de 45° par rapport à l'axe Z-Z et autour de l'axe X26. La surface géométrique d'enveloppe E du corps 260 de la cellule repose donc sur la surface extérieure 2622 des nervures 262. Les nervures 262 ont une pente extérieure inclinée par rapport à l'axe longitudinal X26. Ainsi, la surface géométrique d'enveloppe E du corps 260 de la cellule 26, autour de l'axe longitudinal X26, est convergente vers l'axe X26 et a donc une forme tronconique. Les surfaces externes 2622 des nervures 262 sont des portions tronconiques. La surface géométrique d'enveloppe E est affleurante avec les surfaces 2622 des nervures 262 qu'elle relie entre elles, autour de l'axe X26.

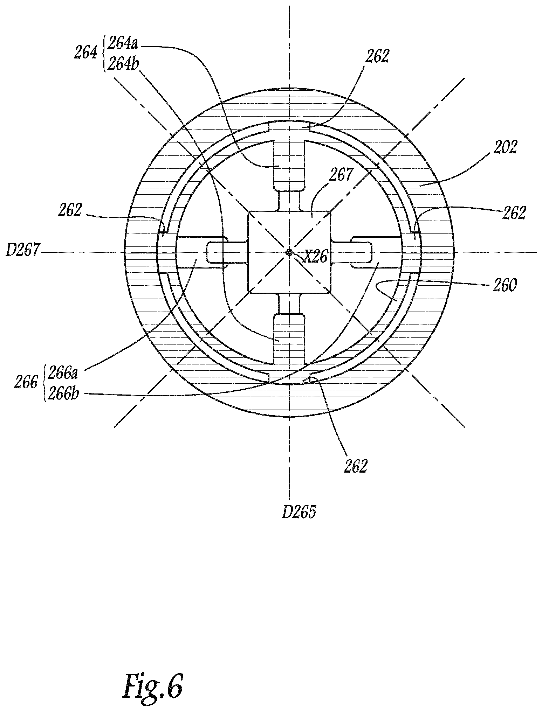

Comme visible à la figure 6, le corps 260 de la cellule 26 comporte, à l'intérieur, deux paires de supports 264 et 266. La première paire 264 est formée par deux supports 264a et 264b qui sont disposés de manière diamétralement opposée à l'intérieur du corps 260. La deuxième paire 266 est formée par deux autres supports 266a et 266b qui sont également disposés de manière diamétralement opposée et qui sont décalés de 90° autour de l'axe X26 de la première paire 264. Entre chaque paire de supports 264 et 266 sont disposées des capteurs qui, dans l'exemple, sont des jauges de déformation 265 et 267. La jauge 265 s'étend du support 264a jusqu'au support 264b et la jauge 267 s'étend du support 266a jusqu'au support 266b. Les jauges 265 et 267 sont respectivement fixées de manière rigide aux supports 264 et 266, notamment par vissage. Les supports 264 et 266 ainsi que les jauges 265 et 267 sont chacun radialement alignés avec une nervure 262. On note D265 et D267 les axes selon lesquelles s'étendent respectivement les jauges 265 et 267. Les supports 264, la jauge de déformation 265 et deux nervures opposées 262 sont donc alignés selon l'axe D265. De manière analogue, les supports 266, la jauge de déformation 267 et deux nervures opposées 262 sont alignés selon l'axe D267. Les efforts appliqués par la structure 202 sur la cellule 26 agissent au niveau des nervures 262. Ces efforts se répercutent donc directement au niveau des supports 264 et 266 et par conséquent au niveau des jauges 265 et 267. Les axes D265 et D267 sont, lorsqu'ils sont ramenés dans un même plan transversal à l'axe X26, perpendiculaires.

Les jauges de déformations 265 et 267 sont donc disposées perpendiculairement l'une par rapport à l'autre, ce qui permet de mesurer plusieurs composantes du torseur de contraintes. On a ainsi une meilleure connaissance de l'état de contraintes de la cellule 26, ce qui permet de déduire plus précisément l'effort F1 appliqué sur une plateforme 20. Les jauges de déformations 265 et 267 étant connues en soi, elles sont représentées aux figures 4, 5 et 6 comme des blocs parallélépipédiques.

Cette cellule de mesure 26 comprend, du côté opposé à la pointe du cône imaginaire, c'est-à-dire du côté divergent de la surface géométrique d'enveloppe E par rapport a l'axe X26, une couronne 268 disposée à l'extrémité et autour du corps 260 de la cellule 26 et sur laquelle sont régulièrement répartis quatre perçages 2682 autour de l'axe central X26. Etant entendu que la surface géométrique d'enveloppe E entoure uniquement le corps 260 et pas la couronne 268. La cellule de mesure 26 comprend en outre quatre vis 2684 qui sont insérées dans les perçages 2682.

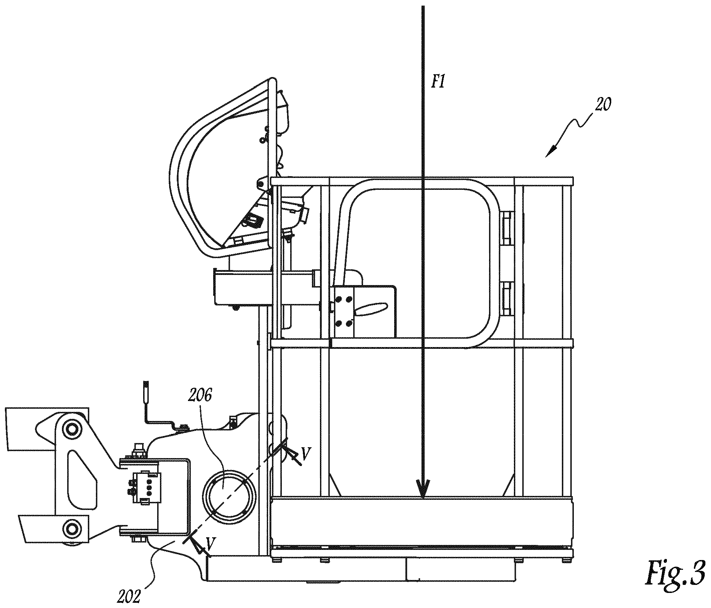

Comme illustré aux figures 2 et 3, la plateforme 20 comprend une structure de support 202. Cette structure de support 202 est située en partie basse de la plateforme 20 et est solidarisée au bras 224 du mât 22 par un assemblage boulonné. Dans cette structure de support 202 est creusée un logement 204 selon une direction X204, parallèle à l'axe X-X. En configuration montée de la cellule 26 sur la structure 202, l'axe X204 et l'axe X26 sont confondus. Le logement 204 présente une ouverture O1 et a un profil complémentaire à celui de la surface géométrique d'enveloppe E du corps 260 de la cellule de mesure 26, à savoir de forme tronconique. Plus précisément, le logement 204 a une surface intérieure 208 convergente depuis l'ouverture O1 vers l'axe X204, qui est inclinée de manière identique à la pente des nervures 262 du corps 260 de la cellule de mesure 26. De plus, le demi-angle au sommet α_{E} de la surface géométrique d'enveloppe E est égal au demi-angle au sommet β₂₀₈ de la surface 208. En pratique, la valeur de ces angles est choisie entre 1° et 10°. De même, le diamètre maximal D260 du corps 260, à l'exception de la couronne 268, est compris entre le diamètre maximum DO1 et le diamètre minimum DO2 de l'ouverture O1. La surface intérieure 208 est donc complémentaire de la surface géométrique d'enveloppe E du corps 260 de la cellule de mesure 26.

En configuration montée de la cellule 26 dans la structure 202, les jauges de déformations 265 et 267 ne sont pas en contact avec la surface interne 208 du logement 204, puisqu'elles sont fixées sur les supports 264 et 266. On évite ainsi la détérioration des jauges de déformations lors du montage et donc des mesures faussées. A l'extérieur et sur la périphérie de l'ouverture O1 du logement 204 sont situés quatre taraudages borgnes 206 dont le pas de vis est complémentaire du filetage externe des vis 2684 et qui sont également régulièrement répartis autour de l'axe X204.

Le logement 204 est creusé au plus près de la plateforme 20 afin de minimiser l'influence du poids de la structure mécanique de la nacelle 2 sur la mesure.

Par ailleurs, le fait d'utiliser une forme tronconique pour la cellule de mesure 26 permet un encastrement facilité et un jeu radial entre la cellule 26 et le logement 204 et par rapport à l'axe X204 minimisé. Cela permet en plus de s'affranchir d'un moyen d'arrêt axial, selon l'axe X204 de la cellule de mesure 26 au niveau de l'extrémité axiale opposée à la couronne 268. La cellule de mesure 26 est fabriquée dans un matériau, tel que de l'acier, ayant des propriétés mécaniques similaires de celles de la structure 202. Ainsi, la cellule de mesure 26 ne constitue pas un maillon faible dans la structure 202 et restitue de manière fidèle les déformations de celle-ci. Il en découle que l'effort vertical mesuré est proche de la réalité. En pratique, la marge d'erreur obtenue pour la mesure d'un effort vertical avec une cellule de mesure intégrée de cette façon est de 10 %.

On distingue par ailleurs un jeu de serrage J1 pris, selon l'axe d'encastrement X204, entre la cellule de mesure 26 et la structure 202. Ce jeu J1 est supérieur à 2 mm, afin que les surfaces extérieures des nervures 262 de la cellule 26 et la surface intérieure 208 du logement 204 soient parfaitement en contact malgré les tolérances de fabrication des pièces et donc, que l'effort mesuré soit représentatif de l'effort vertical F1 appliqué sur la plateforme 20.

Lors de l'assemblage, l'opérateur est amené à encastrer la cellule de mesure 26, selon l'axe d'encastrement X204 dans l'ouverture O1 du logement 204 prévu à cet effet. Dans le cas d'une cellule à section circulaire, l'opérateur doit tourner la cellule 26 autour de l'axe X26 afin que les perçages 2682 et les taraudages 206 soient alignés, selon un axe parallèle à l'axe X204. Une fois la cellule 26 encastrée, il convient de visser les vis 2684 à travers les perçages 2682 et dans les taraudages 206, afin de fixer la cellule de mesure d'effort 26 sur la structure 202. Le nombre de vis 2684 utilisé dépend de l'effort de serrage que l'on veut appliquer entre la cellule de mesure 26 et la structure 202, le but étant de pouvoir assembler la cellule de mesure 26 rapidement, tout en s'assurant qu'elle soit solidement fixée.

A l'inverse, lors du retrait de la cellule 26 hors de la structure 202, il est nécessaire de dévisser les vis 2684, puis d'extraire la cellule 26 en dehors de la structure 202.

L'intégration de la cellule de la mesure 26 dans la plateforme 20 n'ajoute donc pas d'encombrement à la nacelle 2 et est réalisable par un opérateur sans outillage spécialisé.

A titre de variante non représentée, il est également possible d'intégrer la cellule de mesure 26 dans le mât 22. Cela implique cependant d'augmenter l'influence du poids de la structure mécanique de la nacelle 2 dans l'effort mesuré par la cellule et donc de diminuer la précision de mesure de l'effort F1.

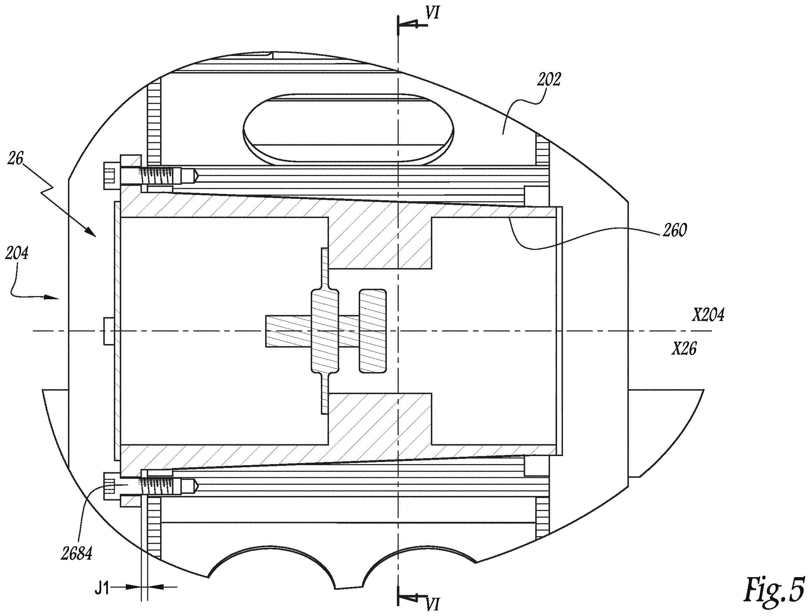

Comme visible à la figure 5, la cellule de mesure 26 traverse le logement 204 mais on peut imaginer que le logement 204 soit de type borgne.

Dans cet assemblage, la cellule de mesure 26 est fixée sur la structure 202 par des vis. Il est aussi envisageable d'immobiliser la cellule de mesure 26 par un clapet mécanique ou une goupille.

On peut aussi envisager d'utiliser une cellule de mesure fonctionnant avec une autre technologie de mesure de déformation.

Enfin, la cellule de mesure 26 est de section circulaire mais on peut également utiliser une section polygonale, elliptique ou toute autre forme adaptée. Dans le cas d'une section polygonale, la surface géométrique d'enveloppe du corps 260 de la cellule est alors une portion de pyramide à base polygonale.

En variante, les jauges 265 et 267 sont collées ou soudées sur les supports 264 et 266.

Les caractéristiques des modes de réalisation et variantes envisagées ci-dessus peuvent être combinées entre elles pour générer de nouveaux modes de réalisation de l'invention.

## Revendications

1. Nacelle élévatrice (2) comprenant un châssis (24) équipé de moyens de déplacement (242) sur la surface du sol, une plateforme (20), des moyens d'élévation de la plateforme par rapport au châssis et une cellule (26) de mesure du poids (F1) d'une charge supportée par la plateforme, cette cellule ayant un corps (260) supportant au moins un capteur (265 , 267) et s'étendant selon un axe longitudinal (X26), **caractérisée en ce que** :
- une surface géométrique d'enveloppe (E) du corps de la cellule, autour de l'axe longitudinal (X26), est convergente vers cet axe, et
- la cellule (26) de mesure du poids est encastrée, selon un axe d'encastrement (X204), dans un logement (204) défini par une surface (208) de forme complémentaire à la surface géométrique d'enveloppe (E), prévu dans une structure de support (202) de la plateforme, de sorte que l'axe d'encastrement (X204) et l'axe longitudinal (X26) sont confondus.

2. Nacelle selon la revendication 1, **caractérisé en ce que** la surface géométrique d'enveloppe (E) est une surface de forme tronconique.

3. Nacelle selon la revendication 1, **caractérisé en ce que** la surface géométrique d'enveloppe (E) est une surface de section transversale elliptique ou polygonale.

4. Nacelle selon l'une des revendications précédentes, **caractérisé en ce que** le corps (260) de la cellule de mesure (26) comprend une ou plusieurs nervures (262) qui s'étendent parallèlement à l'axe longitudinal (X26) et qui sont régulièrement réparties autour de celui-ci et **en ce que** les surfaces extérieures (2622) des nervures (262) définissent la surface géométrique d'enveloppe (E) du corps.

5. Nacelle selon l'une des revendications précédentes, **caractérisée en ce que** le corps (260) de la cellule est creux et comprend à l'intérieur, au moins deux supports (264a, 264b, 266a, 266b) qui sont diamétralement opposés et entre lesquels est fixé un capteur (265 , 267).

6. Nacelle selon la revendication 5, **caractérisée en ce que** le capteur (265 , 267) est une jauge de déformation.

7. Nacelle selon l'une des revendications 4 et 5, **caractérisée en ce que** la cellule comprend en outre une couronne (268) qui est disposée autour et à l'extrémité du corps (260) de la cellule, du côté divergent de la surface géométrique d'enveloppe (E) du corps.

8. Nacelle élévatrice selon la revendication 7, **caractérisée en ce que** la couronne (268) est fixée à la structure de support (202) au moyen de vis (2684) et **en ce que** le jeu de serrage (J1) des vis (2684), pris selon l'axe d'encastrement (X204), est supérieur à 2 mm.

9. Nacelle élévatrice selon l'une des revendications précédentes, **caractérisée en ce que** la cellule de mesure (26) est fabriquée dans un matériau ayant des propriétés de dilatation thermique similaires de celles du matériau de la structure de support (202).

## Patentansprüche

1. Hubarbeitsbühne (2), umfassend ein mit Mitteln (242) zum Bewegen auf der Bodenoberfläche ausgestattetes Fahrgestell (24), eine Plattform (20), Mittel zum Anheben der Plattform relativ zu dem Fahrgestell und eine Zelle (26) zum Messen des Gewichts (F1) einer durch die Plattform getragenen Last, wobei die Zelle einen zumindest einen Sensor (265, 267) tragenden und sich entlang einer Längsachse (X26) erstreckenden Körper (260) aufweist, **dadurch gekennzeichnet, dass**
- eine geometrische Hüllfläche (E) des Körpers der Zelle um die Längsachse (X26) zu dieser Achse hin konvergiert, und
- dass die Zelle (26) zum Messen des Gewichts entlang einer Einfügeachse (X204) in eine Aufnahme (204) eingefügt ist, welche durch eine komplementär zu der geometrischen Hüllfläche (E) ausgebildete Oberfläche (208) definiert ist und in einer Tragstruktur (202) der Plattform vorgesehen ist, derart, dass die Einfügeachse (X204) und die Längsachse (X26) zusammenfallen.

2. Arbeitsbühne nach Anspruch 1, **dadurch gekennzeichnet, dass** die geometrische Hüllfläche (E) eine einen Kegelstumpf formende Fläche ist.

3. Arbeitsbühne nach Anspruch 1, **dadurch gekennzeichnet, dass** die geometrische Hüllfläche (E) eine einen elliptischen oder polygonalen Querschnitt aufweisende Fläche ist.

4. Arbeitsbühne nach einem der vorhergehenden Ansprüche, **dadurch gekennzeichnet, dass** der Körper (260) der Messzelle (26) eine oder mehrere Verstärkungsrippen (262) umfasst, welche sich parallel zu der Längsachse (X26) erstrecken und welche gleichmäßig um die Achse verteilt sind, und dass die Außenflächen (2622) der Verstärkungsrippen (262) die geometrische Hüllfläche (E) des Körpers definieren.

5. Arbeitsbühne nach einem der vorhergehenden Ansprüche, **dadurch gekennzeichnet, dass** der Körper (260) der Zelle hohl ist und im Inneren zumindest zwei Träger (264a, 264b, 266a, 266b) umfasst, welche diametral gegenüberliegend angeordnet sind und zwischen denen ein Sensor (265, 267) befestigt ist.

6. Arbeitsbühne nach Anspruch 5, **dadurch gekennzeichnet, dass** der Sensor (265, 267) ein Dehnungsmessstreifen ist.

7. Arbeitsbühne nach einem der Ansprüche 4 und 5, **dadurch gekennzeichnet, dass** die Zelle des Weiteren einen Kreisring (268) umfasst, welcher um den Körper (260) der Zelle und endseitig von diesem auf der divergenten Seite der geometrischen Hüllfläche (E) des Körpers angeordnet ist.

8. Arbeitsbühne nach Anspruch 7, **dadurch gekennzeichnet, dass** der Kreisring (268) an der Tragestruktur (202) mittels Schrauben (2684) befestigt ist und dass das Klemmspiel (J1) der Schrauben (2684), entlang der Einfügeachse (X204), größer als 2 mm ist.

9. Arbeitsbühne nach einem der vorhergehenden Ansprüche, **dadurch gekennzeichnet, dass** die Messzelle (26) aus einem Material hergestellt ist, welches Wärmeausdehnungseigenschaften aufweist, die denjenigen des Materials der Tragestruktur (202) ähnlich sind.

## Claims

1. An aerial lift (2) comprising a chassis (24) equipped with movement means (242) for moving on the surface of the ground, a platform (20), means for elevating the platform relative to the chassis, and a cell for measuring the weight (F1) of the load supported by the platform, said cell having a body (260) supporting at least one sensor (265, 267) and extending along a longitudinal axis (X26), **characterized in that**:
- a geometric enclosure surface (E) of the body, around the longitudinal axis (X26), converges toward that axis, and
- the force measuring cell (26) is embedded, along an embedding axis (X204), in a housing (204) defined by a surface (208) with a shape complementary to the geometric enclosure surface (E), provided in a support structure (202) of the platform, so that the embedding axis (X204) and the longitudinal axis (X26) are confounded.

2. The lift according to claim 1, **characterized in that** the geometric enclosure surface (E) is a frustoconical surface.

3. The lift according to claim 1, **characterized in that** the geometric enclosure surface (E) is a surface with a transverse, ellipsoid or polygonal section.

4. The lift according to one of the preceding claims, **characterized in that** the body (260) of the measuring cell (26) comprises one or more ribs (262) that extend parallel to the longitudinal axis (X26) and are regularly distributed around the latter, and **in that** the outer surfaces (2622) of the ribs (262) define the geometric enclosure surface (E) of the body.

5. The lift according to one of the preceding claims, **characterized in that** the body (260) of the cell is hollow and comprises, on the inside, at least two supports (264a, 264b, 266a, 266b) that are diametrically opposite and between which a sensor (265, 267) is fastened.

6. The lift according to claim 5, **characterized in that** the sensor (265, 267) is a strain gauge.

7. The lift according to one of claims 4 and 5, **characterized in that** the cell further comprises a ring (268) that is positioned around the end of the body (260) of the cell, on the divergent side of the geometric enclosure surface (E) of the body.

8. The aerial lift according to claim 7, **characterized in that** the ring (268) is fastened to the support structure (202) using screws (2684), and **in that** the tightening play (J1) of the screws (2684), along the embedding axis (X204), is greater than 2 mm.

9. The aerial lift according to one of the preceding claims, **characterized in that** the measuring cell (26) is made from a material having heat expansion properties similar to those of the material of the support structure (202).
